# EUROPÄISCHE PATENTSCHRIFT

(11) **EP 1 238 781 B1**
(45) Veröffentlichungstag und Bekanntmachung des Hinweises auf die Patenterteilung: **02.06.2004**
(21) Anmeldenummer: 01105233.9
(22) Anmeldetag: 04.03.2001
(51) Int. Cl.: B29C 65/16

(54) **Verfahren zum Verschweissen thermoplastischer Fügeteile mittels Diodenlaserstrahlung**
Process for welding thermoplastic joining parts using laser diode radiation
Procédé pour souder des pièces d'assemblage thermoplastiques avec un rayonnement laser à diode

(43) Veröffentlichungstag der Anmeldung: 11.09.2002
(73) Patentinhaber: INPRO Innovationsgesellschaft für fortgeschrittene Produktionssysteme in der Fahrzeugindustrie mbH, 10587 Berlin (DE)
(72) Erfinder: Minkow, Michael, 13593 Berlin (DE); Kempen, Thomas, 12043 Berlin (DE); Stechmann, Lea, 10961 Berlin (DE); Hermann, Matthias, 12161 Berlin (DE); Hoyer, Olaf, 16726 Schwante (DE); Kaya, Özden, 10997 Berlin (DE)
(74) Vertreter: Hoffmann, Klaus-Dieter, Dipl.-Ing.

(56) Entgegenhaltungen:
- DE-A- 2 839 640
- DE-A- 19 925 203

## Beschreibung

Die Erfindung betrifft eine Verfahren zum Verschweißen thermoplastischer Kunststoffügeteile mittels Diodenlaserstrahlung.

Zum Fügen von Kunststoffbauteilen mittels Diodenlaserstrahlung wird herkömmlich das Durchstrahlverfahren verwendet, mit dem sich jedoch zwei transmittierende naturfarbene Kunststoffbauteile nicht schweißmäßig fügen lassen. Vielmehr wird bei diesem Durchlichtschweißen stets ein das Laserlicht absorbierendes Kunststoffügeteil benötigt, das durch die Laserstrahlung erwärmt und aufgeschmolzen wird, wobei das auf dem absorbierenden Kunststoffügeteil liegende transparente Kunststoffügeteil an seiner zu fügenden Oberfläche durch Wärmeleitung ebenfalls erwärmt und aufgeschnmolzen wird. Durch einen entsprechenden Einspanndruck der beiden Kunststoffügeteile werden diese dann während der Abkühlphase unter Verschmelzen an längs der Schweißnaht der beiden Kunststoffügeteile gefügt. Mit diesem herkömmlichen Verfahren können somit nur Kunststoffügepartner verschweißt werden, die von einem für Laserstrahlung transparenten und einem dieses absorbierenden Kunststoffbauteil gebildet sind. Weiterhin ist bei diesem Durchlichtschweißen darauf zu achten, daß der Luftspalt zwischen den zu verschweißenden Kunststoffbauteilen nicht größer als 0,1 mm ist und daß der transparente Kunststoffbauteil beim Einspannen auf dem absorbierenden Kunststoffbauteil liegt.

Bekannt ist ein Verfahren zum Verschweißen mindestens zweier Kunststoffe (DE 199 25 203 A1), bei dem die für das Verschweißen erforderliche Prozeßenergie Laserlichtenergie ist und zumindest ein für letztere durchlässiger Kunststoffügepartner gewählt wird, damit die Für den Schweißvorgang erforderliche Prozeßenergie in den Fügebereich eingekoppelt werden kann. Hierbei werden durch die Hilfsenergie im Fügebereich vorhandene Partikel mindestens eines Stoffes Aⱼ reversibel in einen oder mehrere Stoffe Bj umgewandelt, wobei der oder die Stoffe Bⱼ in ihrer Gesamtheit die Laserstrahlung stärker absorbieren als der Stoff A. Eine den Stoff A enthaltene Schicht kann auf einem der beiden Kunststoffügepartner mittels Tampondruck abgeschieden oder mit einem Pinsel aufgebracht werden.

Bekannt ist weiterhin ein Verfahren zum Schmelzverbinden benachbarter Oberflächen thermoplastischer nichtelastomerer Fügepartner (DE 28 39 640 A), bei dem zwischen letzteren ein Verbindungselement aus einem thermoplastischen blockelestomeren Material angeordnet wird, in das energieaktivierbare Partikel eingemischt sind, die bei Einwirkung von z.B. Laserstrahlung die die Schmelzverbindung bewirkende Wärme erzeugen. Um hochfeste Verbindungen bei Fügepartnern z.B. aus Polycarbonaten zu erhalten, wird ein Copolyester-Elastomerverbindungselement rasch erhitzt, um es zu schmelzen und in einen hochviskosen Zustand zu bringen, und zwar ohne ein nachweisbares Schmelzen der zu verbindenden Fügepartner. Das Coplyester-Elastomerverbindungselement kann auf diese Weise auch mit Glas verbunden werden, wenn auf letzteres zuvor ein Phenoxy-Klebemittel als Grundierung aufgebracht worden ist, das jedoch nicht laserstrahlabsorbierend ist.

Der Erfindung liegt die Aufgabe zugrunde, eine Verschweißung nichtabsorbierender thermoplastischer Kunststoffügeteile mittels Diodenlaserstrahlung auf einfache und zugleich effektive Weise zu ermöglichen. So sollen z.B. zwei transmittierende naturfarbene Kunststoffbauteile beim Durchlichtschweißen gefügt werden.

Diese Aufgabe wird erfindungsgemäß gelöst durch die Kombination folgender Verfahrensschritte des eingangs genannten Verfahrens:
- als Fügepartner werden mindestens zwei für Laserlicht transparente Kunststoffügeteile gewählt,
- dann wird auf der zu fügenden Oberfläche eines der transparenten Fügepartner gezielt eine Plasmabeschichtung und/oder Plasmapigmentierung mittels Plasma- und/oder Volumenpolymerisation vorgenommen,
- hierauf werden der gezielt mit der Polymerschicht und/oder Plasmapigmentierung versehene transparente Fügepartner und mindestens ein unbehandelter transparenter Fügepartner so miteinander fixiert, daß die gezielt vorgesehene Polymerschicht und/oder Plasmapigmentierung zwischen den zu fügenden Oberflächen der transparenten Fügepartner angeordnet und zwischen den zufügenden Oberflächen letzterer ein Luftspalt von maximal 0,1 mm zugelassen wird,
- dann wird die Laserstrahlung des Diodenlasers durch den dieser zugewandten transparenten Fügepartner gelenkt und von der gezielt vorgesehenen Polymerschicht und/oder Plasmapigmentierung absorbiert, wobei es zur Erwärmung und Aufschmelzung der zu fügenden Oberfläche der Fügepartner kommt,
- in der anschließenden Abkühlphase der Fügepartner wird auf diese ein Einspanndruck ausgeübt und die Fügepartner werden unter Verschmelzen längs der Schweißnaht gefügt.

Vorzugsweise erfolgt die gezielte Einstellung der Plasmabeschichtung und/oder Plasmapigmentierung der zu fügenden Oberfläche des transparenten Fügepartners durch partielle Plasma- und/oder Volumenpolymerisation. Die gezielte Einstellung der Plasmabeschichtung und/oder Plasmapigmentierung der zu fügenden Oberfläche des einen transparenten Fügepartners kann auch durch mittels Maskierung lokal definiert abgelegte Plasma- und/oder Volumenpolymerisation erfolgen.

Die zuvor genannte Aufgabe wird erfindungsgemäß auch gelöst durch die alternative Kombination der folgenden Verfahrensschritte des eingangs genannten Verfahrens:
- als Fügepartner werden mindestens zwei für Laserlicht transparente Kunststoflügeteile gewählt,
- dann wird zwischen den zu fügenden Oberflächen der Fügeteile ein laserstrahlungabsorbierendes Klebemittel derart vorgesehen, daß jeglicher Luftspalt zwischen den zu fügenden Oberflächen der miteinander fixierten Fügeteile ausgeglichen wird,
- hierauf wird die Laserstrahlung des Diodenlasers durch den dieser zugewandten transparenten Fügepartner gelenkt und von dem laserstrahlungabsorbierenden Klebemittel absorbiert, wobei es sowohl zur Erwärmung und Aufschmelzung des Klebemittels, als auch der zu fügenden Oberflächen der Fügepartner kommt,
- in der anschließenden Abkühlphase der Fügepartner werden diese unter Verschmelzen längs der Schweißnaht miteinander verklebt und somit gefügt.

In der Abkühlphase der Fügepartner kann auf diese zu ihrer Fügung zusätzlich ein Einspanndruck aufgebracht werden.

Als laserstrahlungabsorbierendes Klebemittel wird bevorzugt ein mit Rußpartikeln angereicherter Kleber, ein pigmentierter Schmelzkleber, ein 2-Komponenten Kleber, ein Lösungsmittel-Kleber und/oder eine Klebefolie verwendet.

Die Schweißnahtfestigkeit der verschweißten Fügeteile wird vorzugsweise einer Zug-/Druckprüfung unterzogen.

Das erfindungsgemäße Verfahren ermöglicht in überraschend einfacher und zugleich effektiver Weise die Verschweißung nichtabsorbierender thermoplastischer Kunststoffe mit hoher Schweißnahtfestigkeit. Da die Fügeteile mit laserstrahlungabsorbierenden Klebern mit hoher Absorptionskonstante fixiert werden können, erübrigen sich gegebenenfalls zusätzliche Einspannungen. Weiterhin ermöglicht die Diodenlaserverschweißung der nichtabsorbierenden Fügeteilen unter Verwendung eines laserstrahlungsabsorbierenden Klebemittels eine beträchtliche Kosteneinsparung, da die Notwendigkeit des Vorsehens eines verhältnismäßig teuren laserstrahlungsabsorbierenden Additivanteils über ein gesamtes Fügeteil hin oder einer Grundierung des letzteren wegfällt: Außerdem ist vorteilhaft, daß thermoplastische laserstrahlungsabsorbierende Schmelzklebertypen eingesetzt werden können, die den Fügepartnern materialmäßig angepaßt sind. Schließlich werden durch das erfindungsgemäße Verfahren die mechanischen Eigenschaften des Grundsubtrats bewahrt.

Das erfindungsgemäße Verfahren wird nun anhand der Zeichnungen erläutert. In diesen zeigen:
**Fig. 1** schematisch das Verfahrensprinzip, bei dem eine mittels Plasmapolymerisation auf einen transparenten Fügepartner aufgebrachte Polymerschicht verwendet wird, und
**Fig. 2** eine schematische Querschnittsansicht der zu verschweißenden Fügeteile aus transparentem Kunststoff in Zuordnung zur einfallenden Laserstrahlung, wobei in alternativer Verfahrensweise ein pigmentierter Kleber in der Schweißzone verwendet wird.

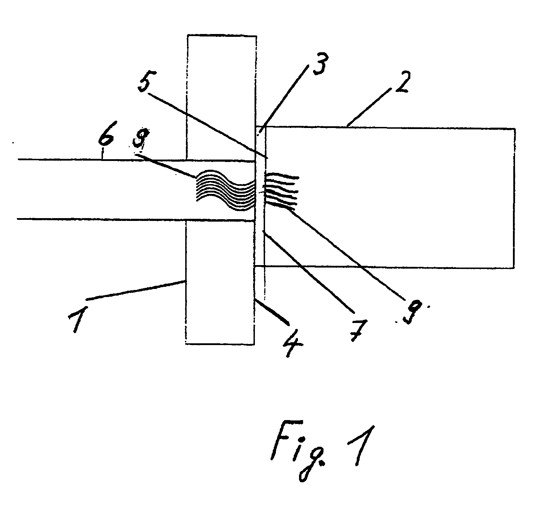

Wie Fig. 1 zu entnehmen ist, wird bei einer bevorzugten Ausführungsform des Verfahrens zum Verschweißen thermoplastischer Kunststoffügeteile mittels Diodenlaserstrahlung eine Polymerschicht 3, die durch Plasmapolymerisation auf eins der beiden transmittierenden naturfarbenen Kunststoffbauteile 1 und 2 in einer Plasmaanlage aufgebracht worden ist, beim Fixieren der beiden transparenten Fügepartner 1 und 2 zwischen deren zu fügenden Oberflächen 4 bzw. 5 angeordnet, wobei zwischen letzteren maximal ein Luftspalt von 0,1 mm zugelassen wird. Die Diodenlaserstrahlung 6 wird dann durch den unbehandelten transparenten Kunststoffügepartner 1 hindurch auf die zwischen letzterem und dem behandelten Kunststoffügepartner 2 befindliche Polymerschicht 3 gelenkt, die die Laserstrahlung 6 absorbiert. Hierbei kommt es durch Wärmeleitung 9 zur Erwärmung und Aufschmelzung der zu fügenden Oberflächen 4 und 5 der beiden Fügepartner 1 bzw. 2 sowie in der anschließenden Abkühlphase der beiden Fügepartner 1 und 2 zu deren Verschmelzung längs der Schweißnaht 7. Die beiden verschweißten transparenten Kunststoffbauteile 1 und 2 können anschließend mittels einer Zug-/Druckprüfmaschine auf Schweißnahtfestigkeit überprüft werden.

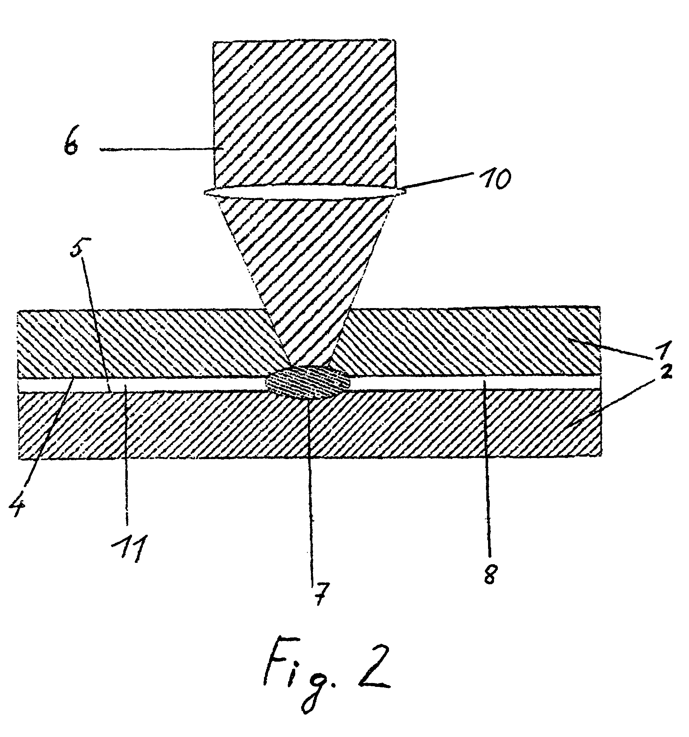

Fig. 2 verdeutlicht eine alternative Ausführungsform des Verfahrens, bei der zwischen den zu fügenden Oberflächen 4 und 5 der beiden transparenten Fügeteile 1 bzw. 2 ein pigmentierter laserstrahlungsabsorbierender Kleber 8 mit hoher Absorptionskonstante derart vorgesehen wird, daß jeglicher Luftspalt zwischen den zu fügenden Oberflächen 4 und 5 der Fügeteile 1 bzw. 2 ausgeglichen wird. Die von einer Linse 10 gebündelte Diodenlaserstrahlung 6 wird durch den dieser zugewandten transparenten Fügepartner 1 gelenkt und im Bereich der Schweißzone 11 von dem pigmentierten laserstrahlungsabsorbierenden Kleber 8 absorbiert. Hierbei kommt es durch zur Erwärmung und Aüfschmelzung des pigmentierten Klebers 8 und durch Wärmeleitung der zu fügenden Oberflächen 4 und 5 der Fügepartner 1 bzw. 2 an der Schweißnaht 7, längs der die transparenten Fügepartner 1 und 2 in der anschließenden Abkühlphase durch Verkleben und zusätzliches Aufbringen eines Einspanndruckes schweißmäßig gefügt werden.

## Patentansprüche

1. Verfahren zum Verschweißen thermoplastischer Kunststoffügeteile mittels Diodenlaserstrahlung,
**gekennzeichnet durch** die Kombination folgender Verfahrensschritte:
- als Fügepartner werden mindestens zwei für die Laserstrahlung transparente Kunststoffügeteile gewählt,
- dann wird auf der zu fügenden Oberfläche eines der transparenten Fügepartner gezielt eine Plasmabeschichtung und/oder Plasmapigmentierung mittels Plasma- und/oder Volumenpolymerisation vorgenommen,
- hierauf werden der gezielt mit der Polymerschicht und/oder Plasmapigmentierung versehene transparente Fügepartner und mindestens ein unbehandelter transparenter Fügepartner so miteinander fixiert, daß die gezielt vorgesehene Polymerschicht und/oder Plasmapigmentierung zwischen den zu fügenden Oberflächen der transparenten Fügepartner angeordnet und zwischen den zufügenden Oberflächen letzterer ein Luftspalt von maximal 0,1 mm zugelassen wird,
- dann wird die Laserstrahlung des Diodenlasers **durch** den dieser zugewandten transparenten Fügepartner gelenkt und von der gezielt vorgesehenen Polymerschicht und/oder Plasmapigmentierung absorbiert, wobei es zur Erwärmung und Aufschmelzung der zufügenden Oberflächen der Fügepartner kommt,
- während der anschließenden Abkühlung der Fügepartner wird auf diese ein Einspanndruck ausgeübt und die Fügepartner werden unter Verschmelzen längs der Schweißnaht gefügt.

2. Verfahren nach Anspruch 1, **dadurch gekennzeichnet, daß** die gezielte Einstellung der Plasmabeschichtung und/oder Plasmapigmentierung der zu fügenden Oberfläche des einen transparenten Fügepartners durch partielle Plasma- und/oder Volumenpolymerisation erfolgt.

3. Verfahren nach Anspruch 1, **dadurch gekennzeichnet, daß** die gezielte Einstellung der Plasmabeschichtung und/oder Plasmapigmentierung der zu fügenden Oberfläche des einen transpareneten Fügepartner durch mittels Maskierung lokal definiert abgelegte Plasma- und/oder Volumenpolimerisation erfolgt.

4. Verfahren zum Verschweißen thermoplastischer Kunststoffügeteile mittels Diodenlaserstrahlung,
**gekennzeichnet durch** die Kombination folgenden Verfahrensschritte:
- als Fügepartner werden mindestens zwei für Laserlicht transparente Kunststoffügeteile gewählt,
- dann wird zwischen den zufügende Oberflächen der Fügeteile ein laserstrahlungabsorbierendes Klebemittel derart vorgesehen, daß jeglicher Luftspalt zwischen den zufügenden Oberflächen der miteinander fixierten Fügeteile ausgeglichen wird,
- hierauf wird die Laserstrahlung des Diodenlasers **durch** den dieser zugewandten transparenten Fügepartner gelenkt und von dem laserstrahlungsabsorbierenden Klebemittel absorbiert, wobei es sowohl zur Erwärmung und Aufschmelzung des Klebemittels, als auch der zu fügenden Oberflächen der Fügepartner kommt,
- bei der anschließenden Abkühlung der Fügepartner werden diese unter Verschmelzen längs der Schweißnaht miteinander verklebt und somit gefügt.

5. Verfahren nach Anspruch 4, **dadurch gekennzeichnet,** däß in der Abkühlphase der beiden Fügepartner auf diese zusätzlich ein Einspanndruck zu ihrer Fügung aufgebracht wird.

6. Verfahren nach Anspruch 4 und 5, **dadurch gekennzeichnet, daß** ein mit Rußpartikeln angereicherte Kleber als laserstrahlungsabsorbierende Klebemittel verwendet wird.

7. Verfahren nach Anspruch 4 und 5, **dadurch gekennzeichnet, daß** als laserstrahlungsabsorbierendes Klebemittel pigmentierte Schmelzkleber, 2-Komponenten-Kleber, Lösungsmittel-Kleber und/oder Klebefolien verwendet werden.

8. Verfahren nach einem der vorhergehenden Ansprüche, **dadurch gekennzeichnet, daß** die Schweißnahtfestigkeit der verschweißten Fügeteile einer Zug-/Druckprüfung unterzogen wird.

## Claims

1. A process for welding thermoplastic joining parts using laser diode radiation,
**characterized by** the combination of the following process steps:
- at least two plastic joining parts that are transparent to laser radiation are chosen as the joining counterparts,
- then a plasma coating and/or plasma pigmentation is precisely applied to the surface for joining of one of the transparent joining counterparts via plasma and/or volume polymerisation,
- then the transparent joining counterpart that is furnished with the precise polymer coating and/or plasma pigmentation and at least one untreated transparent joining counterpart are affixed to one another in such manner that the precisely applied polymer film and/or plasma pigmentation is arranged between the surfaces for joining of the transparent joining counterparts and an air gap of no more than 0.1 mm is left between the surfaces joining thereof,
- then the laser radiation from the diode laser is directed through the transparent joining counterpart facing the laser radiation and is absorbed by the precisely applied polymer film and/or plasma pigmentation, thereby causing the surfaces for joining of the joining counterparts to become heated and to melt,
- during the subsequent cooling of the joining counterparts, a clamping pressure is exerted thereon and the joining counterparts are joined along the weld seam by fusion.

2. The process according to claim 1, **characterized in that** the precise adjustment of the plasma coating and/or plasma pigmentation of the surface for joining of the one transparent counterpart is effected via partial plasma and/or volume polymerisation.

3. The process according to claim 1, **characterized in that** the precise adjustment of the plasma coating and/or plasma pigmentation of the surface for joining of the one transparent joining counterpart is effected by plasma and/or volume polymerisation that is deposited in a locally defined manner by masking.

4. The process for welding thermoplastic joining parts using laser diode radiation,
**characterized by** the combination of the following process steps:
- at least two plastic joining parts that are transparent to laser light are chosen as the joining counterparts,
- then an adhesive capable of adsorbing laser radiation is applied between the surfaces for joining of the joining counterparts in such manner that all air gaps between the surfaces for joining of the affixed joining counterparts are neutralised,
- then the laser radiation from the laser diode is directed through the transparent joining counterpart facing the laser radiation and is absorbed by the laser-adsorbent adhesive, thereby causing both the adhesive as well as the surfaces for joining of the joining counterparts to heat up and melt,
- during the subsequent cooling of the joining counterparts, the counterparts are bonded together by fusion along the weld seam and thus joined.

5. The process according to claim 4, **characterized in that** in the cooling phase of the two joining counterparts and additional clamping pressure is applied thereto for purposes of joining them.

6. The process according to claims 4 and 5, **characterized in that** an adhesive enriched with carbon black particles is used as the bonding agent capable of adsorbing laser radiation.

7. The process according to claims 4 and 5, **characterized in that** pigmented hot melts, bi-component adhesives, solvent adhesives and or adhesive foils are used as the bonding agent capable of adsorbing laser radiation.

8. The process according to any of the preceding claims, **characterized in that** the weld seam strength of the welded joining parts is subjected to a compression-tension test.

## Revendications

1. Procédé pour souder des pièces d'assemblage en matière plastique thermoplastique au moyen d'un rayonnement laser à diode,
**caractérisé par** la combinaison des étapes opératoires suivantes :
- on choisit comme partenaires d'assemblage au moins deux pièces d'assemblage transparentes au rayonnement laser,
- on procède ensuite sur la surface à assembler d'un des partenaires d'assemblage transparents de manière ciblée à un revêtement au plasma et/ou à une pigmentation au plasma au moyen d'une polymérisation au plasma et ou volumique,
- sur quoi, on fixe le partenaire d'assemblage transparent pourvu d'une manière ciblée de la couche de polymère et/ou de la pigmentation au plasma et au moins un partenaire d'assemblage transparent non traité l'un à l'autre de manière à ce que la couche de polymère et/ou la pigmentation au plasma prévue de manière ciblée soit disposée entre les surfaces à assembler des partenaires d'assemblage transparents et à laisser entre les surfaces à assembler de ces derniers, une fente d'air de 0,1 mm au maximum,
- le rayon laser du laser à diode est ensuite dirigé à travers le partenaire d'assemblage tourné vers ce rayon et absorbé par la couche de polymère et/ou la pigmentation au plasma prévue de manière ciblée, tandis qu'il se produit un réchauffement et une fusion des surfaces des partenaires à assembler,
- pendant le refroidissement suivant des partenaires d'assemblage, on exerce sur ceux-ci une pression de serrage et les partenaires d'assemblage sont assemblés en fondant le long du cordon de soudure.

2. Procédé selon la revendication 1, **caractérisé en ce que** la mise en place ciblée du revêtement au plasma et/ou de la pigmentation au plasma de la surface à assembler d'un partenaire d'assemblage transparent se fait par polymérisation partielle au plasma et/ou volumique.

3. Procédé selon la revendication 1, **caractérisé en ce que** la mise en place ciblée du revêtement au plasma et/ou de la pigmentation au plasma de la surface à assembler d'un partenaire d'assemblage transparent se fait par polymérisation au plasma et/ou volumique déposée de manière définie localement par masquage.

4. Procédé pour souder des pièces d'assemblage en matière plastique thermoplastique au moyen d'un rayon laser à diode,
**caractérisé par** la combinaison des étapes opératoires suivantes :
- on choisit comme partenaires d'assemblage au moins deux pièces d'assemblage transparentes à la lumière laser,
- on prévoit ensuite entre les surfaces à assembler des pièces d'assemblage une colle absorbant les rayons laser telle que toute fente d'air entre les surfaces à assembler des pièces d'assemblage fixées les unes aux autres soit comblée,
- sur quoi, le rayon laser de la diode au laser est dirigé à travers les partenaires d'assemblage tournés vers ce rayon et absorbé par la colle absorbant les rayons laser, tandis qu'il se produit un réchauffement et une fusion de la colle aussi bien que des surfaces à assembler des partenaires d'assemblage,
- lors du refroidissement suivant des partenaires d'assemblage, ceux-ci sont collés et donc assemblés l'un à l'autre en fondant le long du cordon de soudure.

5. Procédé selon la revendication 4, **caractérisé en ce que**, lors de la phase de refroidissement des deux partenaires d'assemblage, une pression de serrage est appliquée en plus sur ceux-ci pour les assembler.

6. Procédé selon la revendication 4 et 5, **caractérisé en ce qu'**une colle enrichie aux particules de suie est utilisée comme colle absorbant les rayons laser.

7. Procédé selon la revendication 4 et 5, **caractérisé en ce qu'**on utilise comme colle absorbant les rayons laser des colles thermofusibles, des colles à 2 composants, des colles à solvant et/ou des films adhésifs pigmentés.

8. Procédé selon l'une quelconque des revendications précédentes, **caractérisé en ce que** la résistance du cordon de soudure des pièces d'assemblage soudées est soumise à un contrôle par traction/pression.
